(19) Europäisches Patentamt
European Patent Office
Office européen des brevets

(11) EP 3 083 852 B1

(12) **FASCICULE DE BREVET EUROPEEN**

(45) Date de publication et mention de la délivrance du brevet:
**15.11.2017 Bulletin 2017/46**

(21) Numéro de dépôt: **14830842.2**

(22) Date de dépôt: **19.12.2014**

(51) Int Cl.:
***C09D 133/08*** (2006.01) ***C09D 133/10*** (2006.01)
***C08J 7/04*** (2006.01)

(86) Numéro de dépôt international:
**PCT/FR2014/053467**

(87) Numéro de publication internationale:
**WO 2015/092329 (25.06.2015 Gazette 2015/25)**

(54) **COMPOSITION D'ENDUCTION DE FILMS POLYMERES, PROCEDE D'ENDUCTION ET MATERIAUX COMPOSITES OBTENUS**

POLYMERFILMBESCHICHTUNGSZUSAMMENSETZUNG, BESCHICHTUNGSVERFAHREN UND HERGESTELLTE VERBUNDSTOFFE

POLYMER FILM COATING COMPOSITION, COATING PROCESS AND COMPOSITE MATERIALS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363002**

(43) Date de publication de la demande:
**26.10.2016 Bulletin 2016/43**

(73) Titulaire: **Toray Films Europe**
**01700 Saint-Maurice-de-Beynost (FR)**

(72) Inventeurs:
- **OUZINEB, Keltoum**
  **69100 Villeurbanne (FR)**
- **PENACHE, Maria Cristina**
  **F-38230 Chavanoz (FR)**

(74) Mandataire: **Cabinet Plasseraud**
**235 Cours Lafayette**
**69006 Lyon (FR)**

(56) Documents cités:
**EP-A1- 0 260 203 WO-A1-2007/002322**

- **DATABASE WPI Week 200614 Thomson Scientific, London, GB; AN 2006-129324 XP002728759, & JP 2006 028395 A (DAINIPPON INK & CHEM INC) 2 février 2006 (2006-02-02)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 083 852 B1

Printed by Jouve, 75001 PARIS (FR)

## Description

### DOMAINE DE L'INVENTION

Le domaine technique de l'invention est celui des films plastiques, notamment des films polyester. Plus précisément, l'invention concerne une composition destinée à enduire les films polymères permettant d'une part d'améliorer l'adhérence entre le film et un revêtement final, et d'autre part de conférer au film revêtu de bonnes propriétés barrières.

### ARRIERE-PLAN TECHNOLOGIQUE

Les films plastiques et notamment les films polyester sont bien connus pour leurs excellentes propriétés en termes de stabilité thermique, de stabilité dimensionnelle, de résistance chimique et d'énergie de surface relativement haute. Ce sont des matériaux très résistants et particulièrement recherchés comme supports pour des revêtements variés. Les matériaux composites comprenant un film plastique comme support et un revêtement ont de nombreuses applications : l'emballage, et en particulier l'emballage alimentaire, la protection de supports, les films ou feuilles pour l'art graphique, par exemple pour l'impression ou le dessin, et les films métallisés.

Cependant, ces matériaux composites ont pour inconvénient de présenter une adhésion insuffisante entre lesdits supports, en particulier les films polyester, et leurs revêtements, rendant ainsi leur utilisation inefficace et/ou non fiable et donc impropre. Ces problèmes d'adhésion sont particulièrement importants lorsque le matériau composite est soumis à de hautes contraintes. Par exemple, dans le domaine alimentaire, les emballages peuvent être soumis à des conditions d'humidité et de température élevée dans les procédés de remplissage à chaud, pasteurisation et stérilisation. Il est connu que, dans ces situations, les revêtements métalliques n'adhèrent pas correctement au film PET. Ce manque ou perte d'adhérence implique que l'effet barrière à l'oxygène et à la vapeur d'eau attendu est perdu, ce qui provoque une altération du contenu alimentaire et un risque pour la santé.

Pour tenter de résoudre ce problème de liaison entre le support et son revêtement, plusieurs solutions ont été proposées par le passé. Ainsi, les traitements physiques (traitement à la flamme, décharges corona, traitement abrasif) ou physico-chimiques (traitements par un acide, greffage de fonctions chimiques) à la surface des films ont été testés. Ces divers traitements présentant de nombreux inconvénients, l'application d'un enduit intermédiaire leur a été préférée.

Cet enduit intermédiaire, également couramment nommé couche primaire d'accrochage, est conçu pour avoir d'une part une bonne adhérence au support et d'autre part une bonne adhérence au revêtement. De nombreux polymères ou copolymères ont été proposés pour la réalisation de cet enduit. Les brevets US 2 794 742, US 2 627 088 et FR 1 428 831 indiquent que les polymères qui conviennent le mieux en tant que primaire d'accrochage sont des polymères acryliques. La mise en place de cette couche primaire d'accrochage sur le support est réalisée par enduction de solutions organiques ou d'émulsions aqueuses. Un inconvénient de l'utilisation de ces polymères acryliques réside dans le fait que la formulation de l'enduit à base acrylique doit être adaptée à chaque type de revêtement final et donc à chaque utilisation du film revêtu pour avoir la meilleure adhérence possible. Ceci nécessite d'avoir un panel de solutions différentes pour l'industriel. Il a donc été recherché un enduit améliorant l'adhérence du revêtement final à son support qui soit le plus universelle possible et qui permette ainsi de s'affranchir de l'étape d'adaptation de la composition d'enduit à chaque revêtement final. La demande de brevet EP 0 260 203 propose une solution à ce problème. Cette demande de brevet décrit un polymère modifié obtenu par polymérisation radicalaire en phase aqueuse d'au moins un monomère de nature acrylique en présence d'une quantité efficace d'un polyester dissipable dans l'eau, dérivé d'au moins un acide aromatique dicarboxylique et d'au moins un diol aliphatique et comportant une pluralité de groupes sulfonyloxy. Bien que les résultats d'adhérence obtenus avec cette formulation soient bons, on souhaite encore les améliorer.

Par ailleurs, on souhaite également que le matériau composite ait de bonnes propriétés barrières à l'oxygène et à la vapeur d'eau. Si le maintien dans le temps des propriétés barrière du matériau est généralement lié à l'adhérence entre le support et le revêtement du matériau, la qualité initiale de l'effet barrière du matériau est une propriété indépendante. Une des voies classiquement employée pour améliorer l'effet barrière du matériau consiste à augmenter le taux de réticulant dans la composition de la couche primaire d'accrochage. Cependant, cette solution technique a des effets limités : il a été constaté que lorsqu'on augmentait la concentration en réticulant, le niveau de l'effet barrière atteignait rapidement un pallier dont la valeur restait insuffisante par rapport aux besoins.

Dans ce contexte, un des objectifs de la présente invention est de proposer de nouvelles compositions d'enduction de films polymères, et notamment de films polyester, qui, lorsqu'elles sont utilisées comme couche primaire d'accrochage entre un film polymère et un revêtement, sont capable de conférer au matériau composite obtenu des propriétés barrières améliorées. On souhaite en outre que ces matériaux composites aient avantageusement des propriétés d'adhérence aussi bonnes voire meilleures que dans l'art antérieur, et que ces propriétés d'adhérence soient maintenues à haute température et en conditions humides, en particulier que ce matériau composite soit insensible à l'eau. Par ailleurs, un autre objectif consiste à ce que la composition d'enduction soit la plus universelle possible.

## BREVE DESCRIPTION DE L'INVENTION

Les inventeurs ont découvert que ces objectifs pouvaient être atteints par une nouvelle composition d'enduction contenant un additif particulier.

Selon un premier aspect, l'invention a pour objet une composition d'enduction comprenant :

- au moins un polymère acrylique et/ou méthacrylique présentant un taux de gel d'au moins 50% en poids, par rapport au poids total de polymère acrylique et/ou méthacrylique ;
- au moins un réticulant ;
- au moins un polyester à groupes sulfonyloxy soluble ou dispersable dans l'eau.

La présente invention a également pour objet un procédé d'enduction d'un support avec au moins une couche de primaire d'accrochage, caractérisé par la mise en oeuvre des étapes suivantes :

a) on met en oeuvre un support ;
b) éventuellement, on effectue un traitement physique de surface dudit support ;
c) on enduit au moins une face dudit support avec la composition d'enduction telle que décrite ci-dessus ; et
d) on fait réticuler l'enduit pour obtenir une couche primaire d'accrochage, le taux résiduel de fonctions acides libres en surface de la couche primaire d'accrochage étant d'au moins 5% en poids, par rapport au poids total de polymère contenu dans la couche primaire d'accrochage.

Suivant un autre de ses aspects, la présente invention concerne un procédé de préparation d'un matériau composite comprenant l'étape consistant à appliquer sur un support enduit d'une couche primaire d'accrochage tel que décrit ci-dessus un revêtement apte à réagir avec la couche primaire d'accrochage.

Enfin, l'invention a pour objet le matériau composite obtenu ou susceptible d'être obtenu par ce procédé, ainsi qu'un article choisi dans le groupe constitué par des emballages alimentaires et non-alimentaires, les films ou feuilles pour l'art graphique, les films ou feuilles pour la décoration, les films ou feuilles pour la protection de support et les films ou feuilles pour l'isolation thermique et la protection contre l'humidité dans le secteur du bâtiment, comprenant ledit matériau composite.

## BREVE DESCRIPTION DES FIGURES

La figure 1 représente schématiquement un mode de réalisation en ligne du procédé d'enduction selon l'invention.

La figure 2 représente un matériau composite obtenu selon la présente invention.

## DESCRIPTION DETAILLEE DE L'INVENTION

Il est entendu que, dans le contexte de cette description, le terme « compris entre » doit être interprété comme incluant les bornes indiquées.

La composition d'enduction selon l'invention comprend :

- au moins un polymère acrylique et/ou méthacrylique présentant un taux de gel d'au moins 50% en poids, par rapport au poids total de polymère acrylique et/ou méthacrylique ;
- au moins un réticulant ;
- au moins un polyester à groupes sulfonyloxy soluble ou dispersable dans l'eau.

Cette composition d'enduction se présente de préférence sous la forme d'une dispersion aqueuse.

Le polymère acrylique et/ou méthacrylique selon l'invention comprend des monomères acryliques et/ou méthacryliques. Il est constitué par des monomères pouvant être de différente nature : des monomètres hydrophobes, des monomères hydrophiles et des monomères partiellement hydrophiles. De préférence, le polymère acrylique et/ou méthacrylique selon l'invention comprend :

i. au moins un monomère partiellement hydrophile d'acrylate d'alkyle, de méthacrylate d'alkyle ou un mélange des deux, la portion alkyle de ces monomères contenant 1 ou 2 atomes de carbone ;
ii. éventuellement au moins un monomère hydrophobe d'acrylate d'alkyle, de méthacrylate d'alkyle ou un mélange

des deux, la portion alkyle de ces monomères étant linéaire ou branchée et contenant au moins 4 atomes de carbone ;
iii. au moins un monomère hydrophile.

Les monomères partiellement hydrophiles qui peuvent être employés pour la présente invention incluent les acrylates d'alkyle ou les méthacrylates d'alkyle où la portion alkyle a 1 ou 2 atomes de carbone. Les monomères partiellement hydrophiles préférés sont l'acrylate de méthyle, le méthacrylate de méthyle, l'acrylate d'éthyle, et leurs mélanges, le méthacrylate de méthyle et l'acrylate d'éthyle étant les plus préférés.

La quantité de monomères partiellement hydrophiles basée sur la masse totale de monomère est de façon préférée d'au moins 5 % en poids, de façon plus préférée d'au moins 30% en poids, de façon plus préférée comprise entre 40% et 60% en poids, et de façon encore plus préférée comprise entre 50% et 60% en poids.

Les monomères hydrophobes qui peuvent être employés pour la présente invention incluent les acrylates d'alkyle ou les méthacrylates d'alkyle où la portion alkyle est linéaire ou branchée et contient au moins 4 atomes de carbone. La portion alkyle peut être choisie dans le groupe constitué par n-butyle, iso-butyle, t-butyle, n-pentyle, n-hexyle, éthyl-2-hexyle, décyle, dodécyle, et octadécyle. Les monomères hydrophobes préférés sont l'acrylate de butyle, le méthacrylate de butyle et leurs mélanges.

La quantité de monomères hydrophobes basée sur la masse totale de monomère est de façon préférée d'au moins 5% en poids, de façon plus préférée d'au moins 10% en poids.

Les monomères hydrophiles qui peuvent être employés dans la présente invention sont des monomères copolymérisables avec les monomères d'acrylate d'alkyle ou de méthacrylate d'alkyle et qui sont solubles dans l'eau. Les monomères hydrophiles peuvent être sélectionnés parmi les acides mono-carboxyliques mono-oléfiniques, les acides di-carboxyliques mono-oléfiniques et leurs mélanges. Des exemples de monomères hydrophiles incluent, mais ne sont pas limités à, l'acide acrylique, l'acide méthacrylique, l'acide fumarique, l'acide maléique, l'acide itaconique, l'acide crotonique, un oligomère d'acide acrylique et leurs mélanges. Les acides préférés sont l'acide acrylique, l'acide méthacrylique et leurs mélanges.

La quantité de monomères hydrophiles basée sur la masse totale de monomères est d'au moins 5% en poids, de préférence d'au moins 10% en poids.

La masse totale de monomères hydrophobes, hydrophiles et partiellement hydrophiles décrits ci-dessus représente de façon préférée au moins 60%, de façon plus préférée au moins 75%, de façon plus préférée au moins 80%, et de façon encore plus préférée au moins 90% de la masse totale des monomères constituant le polymère acrylique et/ou méthacrylique selon l'invention. Le pourcentage massique de monomères différents de ces monomères hydrophobes, hydrophiles et partiellement hydrophiles est de préférence inférieur à 20%, de façon plus préférée inférieur à 10%, et de façon encore plus préférée inférieur à 5%, par rapport à la masse totale des monomères. De préférence, le polymère acrylique et/ou méthacrylique selon l'invention est constitué ou essentiellement constitué par les monomères hydrophobes, hydrophiles et partiellement hydrophiles décrits ci-dessus.

Avantageusement, le polymère acrylique et/ou méthacrylique selon l'invention peut ne pas contenir de monomères non compatible avec des applications alimentaires, par exemple des monomères choisis dans le groupe constitué par les monomères de type acrylamide, de type acide ou ester di-carboxylique aromatique (notamment acide phtalique, isophtalique et téréphtalique et les esters correspondants), de type styrène, de type alkylphénol ou de type butadiène.

De préférence, le polymère acrylique et/ou méthacrylique selon l'invention comprend :

i. au moins 30% de monomère(s) partiellement hydrophile(s) choisi(s) parmi l'acrylate de méthyle, le méthacrylate de méthyle, l'acrylate d'éthyle, et leurs mélanges.
ii. éventuellement au moins un monomère hydrophobe d'acrylate d'alkyle, de méthacrylate d'alkyle ou un mélange des deux, la portion alkyle de ces monomères étant linéaire ou branchée et contenant au moins 4 atomes de carbone ;
iii. au moins 10% de monomère(s) hydrophile(s) choisi(s) parmi l'acide acrylique, l'acide méthacrylique et leurs mélanges ;

Le polymère acrylique et/ou méthacrylique selon l'invention se présente de préférence sous la forme de particules de polymère. Ces particules peuvent être dispersées en phase aqueuse. De préférence, la taille des particules de polymère est faible : le diamètre moyen des particules peut être inférieur à 100 nm. Par conséquent, la surface particulaire du polymère est très haute.

Selon la présente invention, le polymère acrylique et/ou méthacrylique présente un taux de gel d'au moins 50% en poids, par rapport au poids total de polymère acrylique et/ou méthacrylique. Le taux de gel d'un polymère représente le taux d'insoluble du polymère, et il permet donc de caractériser le niveau de réticulation du polymère. La mesure du taux de gel des particules de polymères acryliques et/ou méthacryliques est effectuée grâce à un extracteur Soxhlet avec la technique suivante :

1 g de polymère acrylique et/ou méthacrylique est placé dans une capsule de cellulose qui a été pesée préalablement.

Un ballon est rempli de 100 ml de solvant tétrahydrofurane (THF) et laissé sous atmosphère d'azote. Le système est chauffé jusqu'à 95°C à l'aide d'un bain d'huile. A 95°C, le flux d'azote est diminué et des feuilles d'aluminium sont posées autour de la colonne en verre en vue de la garder chaude et d'éviter la condensation du THF sur les parois. L'extraction démarre lorsque le THF s'évapore et lorsqu'il tombe dans la capsule solubilisant le polymère acrylique et/ou méthacrylique qui n'est pas réticulé. L'extraction dure 7 heures. Ensuite la capsule est séchée à 105°C pendant une nuit.

La mesure du taux de gel (G) est calculée avec l'équation suivante :

$$G\ (\%) = [(Mf - Mc)\ X\ 100]\ /\ Mi$$

dans laquelle :

- Mf est la masse finale, c'est-à-dire après séchage, de la capsule et du polymère non-soluble,
- Mc est la masse de la capsule, et
- Mi est la masse du polymère séché.

Par simplicité et par convention, le polymère acrylique et/ou méthacrylique ayant un taux de gel d'au moins 50% en poids par rapport au poids total de polymère acrylique et/ou méthacrylique, ou une dispersion aqueuse de celui-ci, peut être désigné par le terme « latex ».

Dans la présente invention, la composition d'enduction comprend en outre au moins un réticulant. Par réticulant, on entend un additif ajouté dans au polymère acrylique et/ou méthacrylique et qui génère une réaction de réticulation entre les chaînes polymères, notamment grâce les fonctions hydroxy et carboxyliques du polymère acrylique et/ou méthacrylique. Ce réticulant génère ainsi la formation d'un ou plusieurs réseaux tridimensionnels. Le polymère acrylique et/ou méthacrylique selon l'invention étant déjà très réticulés, le réticulant qui est ajouté n'est pas destiné à assurer une réticulation intramoléculaire. Les inventeurs pensent que ce réticulant va permettre une réticulation interfaciale du polymère sous forme de particules, et surtout être utilisé comme un agent polarisant la surface du film formé par les particules acryliques et/ou méthacryliques.

Les réticulants connus de l'homme du métier peuvent convenir à la mise en oeuvre de la présente invention. Les réticulants peuvent être des résines à base d'amine, notamment des mélamines-aldéhydes, des benzoguanamine-aldéhyde ou des dérivés de celles-ci. Les résines à base d'amine sont des mélanges complexes, possédant différents sites fonctionnels, et ils sont classiquement synthétisés par condensation de formaldéhyde avec une amine et l'alkylation ultérieure des groupes méthylol résultants avec un alcool.

Certains réticulants utilisés sont des résines mélamine-aldéhyde de formule (I) ou des résines benzoguanamine-aldéhyde de formule (II) :

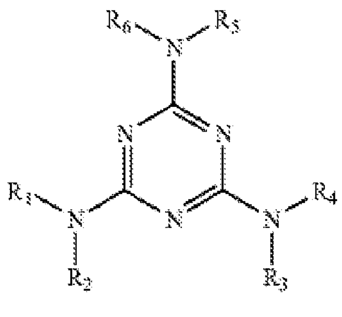 (I)

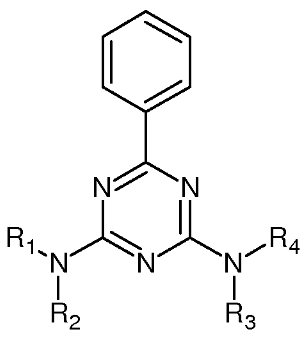 (II)

où les groupes $R_1$ à $R_6$ sont choisis indépendamment les uns des autres parmi -H, $-CH_2OH$ et $-CH_2OR_7$, $R_7$ étant un groupe alkyle en $C_1$ à $C_5$.

Les résines à base d'amine préférentiellement utilisées dans la présente invention sont Cymel 1123® (une résine méthylée et éthylée de benzoguanamine-formaldéhyde, 98% minimum de solides) et Cymel 303LF® (une résine méthylée de mélamine-formaldéhyde ayant des groupes réactifs alcoxy, 98% minimum de solides), dont les structures chimiques respectives sont données ci-dessous :

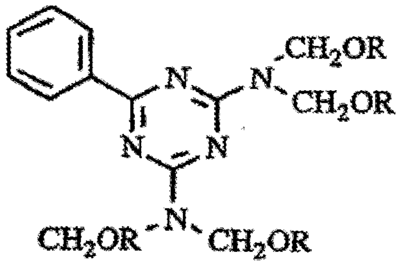

Cymel 1123

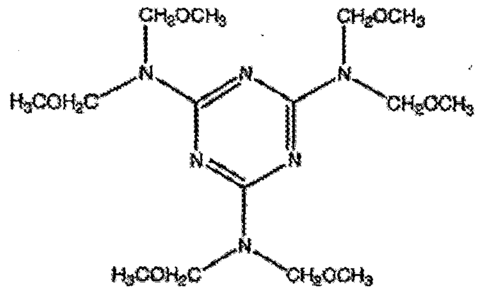

Cymel 303

(dans laquelle R peut être $CH_3$ ou $C_2H_5$)

Ces résines sont commercialisées par Cytec Industries Inc.

Les meilleures performances sont obtenues avec :

- des réticulants choisis parmi les résines à base d'amine partiellement méthylée ou mieux encore fortement méthylée, et/ou
- des réticulants permettant un durcissement rapide à une température supérieure à 80°C, et/ou
- des réticulants ayant une stabilité au stockage à long terme, de préférence supérieure à 48 heures, après son mélange avec le polymère acrylique en milieu aqueux.

Les groupes fonctionnels du réticulant et les groupes carboxyl, hydroxyl, amide et/ou méthylol disponibles sur les polymères acryliques et/ou méthacryliques peuvent réagir en présence d'un catalyseur acide. Le catalyseur acide peut être bloqué ou non. Comme catalyseur acide adapté à présente invention, on peut citer, sans se limiter à ceux-ci, les acides minéraux, l'acide p-toluène sulfonique, l'acide dinonylnaphtalène disulfonique, l'acide dodécylbenzènesulfonique, l'acide oxalique, l'acide maléique, l'acide hexamique, l'acide phosphorique, l'acide phtalique, l'acide acrylique copolymérisé dans le polymère. Le catalyseur le plus couramment utilisé est l'acide para-toluène sulfonique. La quantité optimale de catalyseur est fonction de l'acidité du polymère acrylique et/ou méthacrylique et de la température de durcissement ciblées.

Ces réticulants montrent généralement une bonne réactivité à partir d'une température supérieure à 140°C. Les réticulants de type mélamine-formol ont classiquement une température minimale d'activation au-delà de 100°C, ce qui est adapté pour le procédé selon l'invention et correspond aussi à la température de séchage du polymère par évaporation de l'eau et donc à la formation de l'enduit réticulé.

Dans la composition d'enduction selon l'invention, les proportions massique (poids/poids) de polymère acrylique et/ou méthacrylique par rapport au réticulant sont de façon préférée comprises entre 95/5 et 70/30, de façon plus préférée entre 90/10 et 75/25, et de façon encore plus préférée entre 85/15 et 80/20.

En outre, la composition d'enduction selon l'invention comprend au moins un polyester à groupes sulfonyloxy soluble ou dispersable dans l'eau. Par « polymère dispersable dans l'eau », on entend dans la présente invention un polymère formant avec l'eau des dispersions stables homogènes.

Les groupes sulfonyloxy sont définis comme les groupes de formule générale

$$-SO_3H \text{ ou } (-SO_3^-)_n\ M^{n+}$$

dans laquelle n vaut 1 ou 2 et M représente un ion alcalin, un ion alcalino-terreux ou un ammonium quaternaire.

Le polyester à groupes sulfonyloxy peut être obtenu par polycondensation d'un ou plusieurs acide aromatique dicarboxylique avec un ou plusieurs diols aliphatiques et au moins un composé difonctionnel comprenant au moins un groupe sulfonyloxy.

Parmi les acides aromatiques dicarboxyliques utilisables, on peut citer l'acide téréphtalique, l'acide isophtalique, l'acide phtalique, l'acide naphtalène-1,4-dicarboxylique, l'acide oxy-4,4'-dibenzoïque, la bis(hydroxycarbonyl-4-phényl)sulfone et la di-hydroxycarbonyl-4,4'-benzophénone. Ces acides peuvent être utilisés seuls ou en mélanges. L'acide aromatique dicarboxylique est de préférence choisi parmi l'acide téréphtalique, l'acide isophtalique et leurs mélanges. Des acides dicarboxyliques aliphatiques comportant de 3 à 15 atomes de carbone peuvent être associés aux acides aromatiques dicarboxyliques, par exemple l'acide adipique, l'acide subérique, l'acide sébacique, l'acide succinique et l'acide dodécanedioïque.

Parmi les diols utilisables, on peut citer l'éthylèneglycol, le butane-1,4-diol, le butane-1,3-diol, le propane-1,3-diol, le propane-1,2-diol, le 2,2-diméthylpropane-1,3-diol (ou néopentylglycol), le pentane-1,5-diol, l'hexane-1,6-diol, le cyclohexanediméthanol, le diéthylèneglycol, le triéthylèneglycol, le tétraéthylèneglycol, le pentamétylèneglycol, l'hexamétylèneglycol ou le décamétylèneglycol. De préférence, le diol est choisi parmi l'éthylèneglycol et ses oligomères, seuls ou en mélange entre eux et/ou avec d'autres diols. Les oligomères de l'éthylèneglycol sont représentés par la formule $HO-(CH_2-CH_2-O-)_nH$ dans laquelle n est un nombre entier compris entre 2 et 10.

Enfin, le composé difonctionnel comprenant au moins un groupe sulfonyloxy peut être choisi parmi les composés comprenant au moins un groupe sulfonyloxy tel que défini ci-dessus et comprenant au moins deux groupes fonctionnels susceptibles de réagir avec les diacides et/ou les diols par polycondensation. On peut citer par exemple les sels de métaux alcalins d'acides aromatiques dicarboxyliques à groupes sulfonyloxy tels que ceux des acides sulfotéréphtaliques, sulfoisophtaliques, sulfophtaliques, 4-hydroxysulfonyl-naphtalène-2,7-dicarboxyliques ou à leurs dérivés et en particulier à leurs esters.

Par exemple, un polyester à groupes sulfonyloxy solubles ou dispersables dans l'eau selon l'invention peut répondre à la formule chimique suivante :

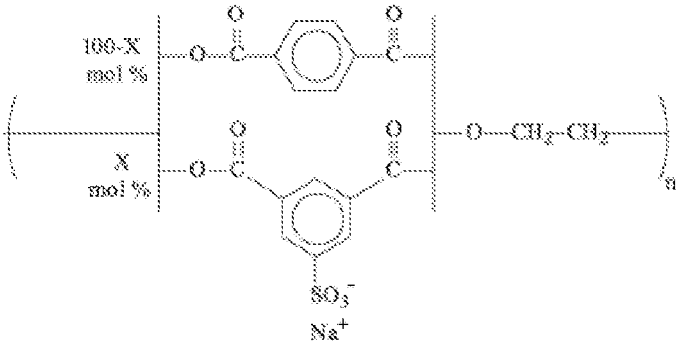

dans laquelle X vaut 20.

Des polyesters à groupes sulfonyloxy solubles ou dispersables dans l'eau ont été décrit dans l'art antérieur, par exemple dans la demande de brevet EP 0 260 203. En outre, des polyesters pouvant être utilisés dans la présente invention sont disponibles commercialement.

Dans la composition d'enduction selon l'invention, la teneur en polyester à groupes sulfonyloxy soluble ou dispersable dans l'eau est de façon préférée comprise entre 2% et 30% en poids, de façon plus préférée entre 5% et 20% en poids, et de façon encore plus préférée entre 8% et 12% en poids sec, par rapport au poids sec de polymère acrylique et/ou méthacrylique.

Dans une variante de réalisation de la présente invention, la composition d'enduction peut en outre contenir des additifs, notamment des charges minérales ou des particules organiques ou inorganiques en dispersion dans l'eau qui auront pour but de contrôler le glissant du support après enduction. Toutefois, de préférence, l'enduit selon l'invention ne contient pas de promoteur d'adhérence, par exemple des citrates, des adipates ou des huiles végétales époxydées.

La composition d'enduction peut être obtenue en mélangeant les composés de préférence dans de l'eau. La composition se présente alors sous la forme d'une dispersion aqueuse. L'extrait sec de la composition peut être compris entre 5% et 40% en poids, de préférence entre 10% et 30 % en poids, par rapport au poids total de la composition.

Les inventeurs ont découvert que la composition d'enduction telle que décrite ci-dessus était particulièrement intéressante dans la mesure où elle peut être utilisée comme couche primaire d'accrochage entre un film polymère et un revêtement, et que, de façon tout à fait inattendue, elle confère au matériau composite obtenu non seulement des propriétés d'adhérence aussi bonne, voire meilleures que dans l'art antérieure, mais aussi des propriétés barrières améliorées.

La présente invention a également pour objet un procédé d'enduction d'un support avec au moins une couche de primaire d'accrochage.

Le support pour le procédé d'enduction est un support solide, de préférence flexible. Il peut s'agir notamment d'un film polymère. On utilise tout particulièrement un film polyester. Le polyester est un produit de polycondensation d'un ou plusieurs acides dicarboxyliques aromatiques (acide téréphtalique, acide isophtalique par exemple) ou de leurs dérivés (halogénures, esters) avec au moins un alcoylèneglycol (éthylèneglycol ; propane-1,3-diol ; butane-1,4-diol par exemple). De préférence, il s'agit de polyesters dérivés de l'acide téréphtalique ou d'un mélange d'acide téréphtalique et d'un autre acide aromatique dicarboxylique (acide isophtalique par exemple), la teneur du mélange en acide téréphtalique étant suffisante pour que le polymère soit essentiellement cristallin après étirage.

De préférence, on utilise dans la présente invention des polyesters linéaires filmogènes, cristallisables par

orientation et obtenus de façon usuelle à partir d'un ou plusieurs acides aromatiques dicarboxyliques ou leurs dérivés (esters d'alcools aliphatiques inférieurs ou halogénures par exemple) et d'un ou plusieurs diols (glycols) aliphatiques.

Le polyester constituant le film de base peut être choisi parmi les polyesters auxquels on fait appel habituellement pour l'obtention de films semi-cristallins bi-orientés. Comme exemples d'acides aromatiques, on peut citer les acides phtaliques, téréphtaliques, isophtaliques, naphtalène-2,5-dicarboxyliques, et naphtalène-2,6-dicarboxyliques. Ces acides peuvent être associés à une quantité mineure d'un ou plusieurs acides dicarboxyliques aliphatiques ou cycloaliphatiques, tels que les acides adipiques, azélaïques, tétra- ou hexahydrotéréphtaliques. Comme exemples non limitatifs de diols aliphatiques, on peut citer l'éthylèneglycol, le propane-1,3-diol et le butane-1,4-diol. Ces diols peuvent être associés à une quantité mineure d'un ou plusieurs diols aliphatiques plus condensés en carbone (néopentylglycol par exemple) ou cycloaliphatiques (cyclohexanedimethanol par exemple).

Préférentiellement, les polyesters filmogènes cristallisables sont des polytéréphtalates ou des polynaphtalènedicarboxylates d'alkylènediol et, en particulier, le polytéréphtalate d'éthylèneglycol (PET) ou de butane-1,4-diol ou des copolyesters comportant au moins 80% en moles de motifs téréphtalate d'éthylèneglycol. Avantageusement, le polyester est un polytéréphtalate d'éthylèneglycol dont la viscosité intrinsèque mesurée à 25°C dans l'ortho-chlorophénol est comprise entre 0,6 dl/g et 0,75 dl/g.

Les films de polyester bi-orientés sont, par exemple :

- soit constitués de polyéthylène téréphtalate ;
- soit constitués de mélanges ou non de copolyesters polyéthylène téréphtalate contenant des unités cyclohexyl diméthylol à la place des unités éthylène ;
- soit composés de mélanges ou non de copolyesters polyéthylène téréphtalate avec une partie de polyester présentant des unités isophtalate ;
- soit constitués de plusieurs couches de polyesters de natures chimiques différentes, comme décrit précédemment, obtenus par coextrusion.

Des exemples spécifiques de polyesters aromatiques sont notamment le polyéthylène téréphtalate (PET), le polyéthylène isophtalate, le polybutylène téréphtalate, le poly-(diméthyl-1,4-cyclohexylènetéréphtalate) et le polyéthylène-2,6-naphtalènedicarboxylate. Le polyester aromatique peut être un copolymère de ces polymères ou un mélange de ces polymères avec une petite quantité d'autres résines, par exemple et sans être limitatif le polybutylène téréphtalate (PBT). Parmi ces polyesters, le polyéthylène téréphtalate (PET) et le polyéthylène-2,6-naphtalènedicarboxylate (PEN) sont particulièrement préférés car ils offrent un bon équilibre entre les propriétés physiques, les propriétés mécaniques et les propriétés optiques. De préférence, la teneur en acide téréphtalique, exprimées en moles pour cent moles d'acide est d'au moins 80. Dans les modes de réalisation préférés de l'invention, le support est un film de polyéthylène téréphtalate PET (par exemple à orientation bi-axiale) ou le polyéthylène naphtalate (PEN) ou le polybutylène téréphtalate (PBT).

Les films support mis en oeuvre dans la présente invention peuvent être orientés ou non. De préférence, ils sont orientés. Avantageusement, le film polyester mis en oeuvre est à orientation bi-axiale.

Le support selon l'invention peut être monocouche, bi-couches ou tri-couches. Chacune des couches est composée de polyesters tels que définis ci-dessus, de préférence du PET, PBT ou PEN, et/ou des copolyesters décrits ci-dessus et/ou des mélanges de polyesters/copolyesters. La ou les couches peuvent être selon une structure M, MN, MNM ou MNO où M est différente de N et O, N est différente de O. La couche principale peut être encadrée par une ou deux couches identiques ou non en terme d'épaisseur et/ou de composition. Dans cette structure, le support peut être symétrique ou dissymétrique. Une de ces couches du support peut accroître l'adhérence du futur enduit décrit ci-dessous.

Le support mis en oeuvre pour la présente invention est de préférence un film en polyester, de préférence encore un film en polyéthylène téréphtalate (PET), dont l'épaisseur est de façon préférée inférieure ou égale à 150 $\mu$m (micromètres), de façon plus préférée comprise entre 4 $\mu$m et 100 $\mu$m, de façon plus préférée comprise entre 4 $\mu$m et 40 $\mu$m, et de façon encore plus préférée comprise entre 4 $\mu$m et 12 $\mu$m.

Le support selon l'invention peut comprendre avantageusement en partie du produit recyclé issu du support lui-même et/ou du support enduit et/ou du support enduit et revêtu. Le support peut contenir jusqu'à 80% en poids de ce produit recyclé par rapport au poids total de support final. Ceci permet de réduire les coûts de production du film et d'éviter de pertes économiques dues à la non-utilisation des chutes de support, de support enduit et/ou de support enduit et revêtu.

Le procédé d'enduction selon l'invention comprend une première étape (a) consistant à mettre en oeuvre un support tel que décrit ci-dessus.

Pour améliorer encore les propriétés d'adhésion du revêtement sur le support enduit, le procédé d'enduction peut comprendre une éventuelle étape (b) consistant à effectuer un traitement physique de surface dudit support. Ce traitement est réalisé avant l'enduction (étape c). Tout ou partie de la surface du support peut être traitée. Le traitement physique peut être choisi parmi un traitement par une décharge électrique de type corona et un traitement de type

plasma. Ledit traitement de type corona est une décharge corona sous air ambiant à la pression atmosphérique ou sous gaz à des pressions partielles élevées, préférablement entre 100 mbar et 3000 mbar, encore plus préférablement à la pression atmosphérique.

En vue d'obtenir une adhérence accrue entre le revêtement et le support en condition humide et sèche, un traitement chimique peut également être appliqué au support avant l'étape d'enduction. Le traitement chimique peut intervenir après ou pas un traitement physique. Ce traitement chimique est une enduction d'au moins une couche de primaire d'accrochage ou primaire d'adhérence.

L'étape (c) du procédé selon l'invention consiste à enduire au moins une face dudit support avec la composition d'enduction telle que décrite ci-dessus. Cette étape d'enduction est suivie d'une étape (d) consistant à faire réticuler l'enduit pour obtenir une couche primaire d'accrochage.

Le dépôt de la composition d'enduction sur le support, de préférence sur un film polyester, peut être réalisé par les différentes techniques connues de l'homme de l'art. Ainsi, la composition peut être déposée par gravité à partir d'une couleuse à fente, ou par passage du film dans la dispersion, au moyen de rouleaux de transfert, par enduction en ligne avec un procédé de gravure inversée.

Selon un mode de réalisation préféré de l'invention, l'enduction du support est effectuée en ligne, ce qui permet non seulement une simplification de la mise en oeuvre industrielle mais également un gain de temps et d'argent considérable.

L'épaisseur de l'enduit est choisie en fonction de la cinétique de réticulation de ce dernier. Elle dépend notamment de la quantité d'enduit déposée, de l'extrait sec de la composition employée, du pourcentage de réticulant inclus dans la dispersion et des conditions de séchage de l'enduit.

L'enduction du support se fait sur au moins une face du support. Elle peut bien évidement se faire sur les deux faces du support.

Le support est de préférence un film étirable. De préférence, il subit un étirage dans une ou deux directions perpendiculaires. Lorsqu'il est étiré dans les deux directions, on parle d'un étirage bidimensionnel qui peut être d'abord longitudinal (Etirage Longitudinal EL, taux EL $\geq$ 3,0) suivi par un étirage transversal (Etirage Transversal ET, taux ET $\geq$ 3,5). Le taux d'étirage planaire (défini comme le produit du taux d'étirage longitudinal et du taux d'étirage transversal, quel que soit l'ordre de ces étirages) est par exemple compris entre 1 et 20, habituellement supérieur à 12. Les séquences d'étirage peuvent être différentes en fonction des machines utilisées sans influence sur les propriétés obtenues grâce à l'invention. Par exemple, on peut utilement utiliser des machines dites à séquence inverse ou des machines multi-étapes (« multistep »), des machines à séquences alternées ou des machines d'étirages simultanés, etc. La température d'étirage est par exemple comprise entre la température de transition vitreuse Tg du support et une température au maximum égale à Tg + 60°C en direction longitudinale de même qu'en direction transversale. L'étirage longitudinal est effectué par exemple de 3 à 6 fois et l'étirage transversal par exemple de 3 à 5 fois.

En général, à la suite du ou des étirages, le film subit une étape de thermofixation. A titre d'exemple, pour le PET, la thermofixation est effectuée entre 180°C et 250°C (par exemple à 240°C) pendant 1 à 60 secondes par exemple et ensuite à une température inférieure afin de stabiliser le film.

L'étape de dépôt par enduction de la composition d'enduction peut avoir lieu avant tout étirage du support, entre les deux étapes d'étirages du support ou après les deux étapes d'étirage, cette dernière option étant moins satisfaisante. Selon un mode de réalisation préféré du procédé selon l'invention, l'étape (c) de dépôt de la composition d'enduction est effectuée entre les deux étapes d'étirage. Le procédé d'enduction selon l'invention peut donc en outre deux étapes d'étirage perpendiculaire du support dont au moins une étape est réalisée avant ou après les étapes (b) ou (c), afin d'obtenir un étirage final bidimensionnel.

Après dépôt de l'enduit, la réticulation a lieu pour former une couche primaire d'accrochage. La réticulation a lieu après le dépôt de l'enduit et est provoquée par le séchage de l'enduit, destiné à éliminer l'eau de la dispersion aqueuse. Dans le cas d'une enduction en ligne, il n'est généralement pas nécessaire de procéder à une étape spécifique de séchage : le séchage est réalisé au cours des étapes d'étirages et/ou de thermofixation. Toutefois, il est également envisageable dans la présente invention de mettre en oeuvre une étape de séchage par traitement thermique préalablement à l'étirage et/ou à la thermofixation.

A l'issue de l'étape (d) de réticulation, on obtient une couche primaire d'accrochage, le taux résiduel de fonctions acides libres en surface de la couche primaire d'accrochage étant d'au moins 5% en poids, par rapport au poids total de polymère contenu dans la couche primaire d'accrochage.

Ces fonctions acides libres proviennent du polymère acrylique et/ou méthacrylique contenu dans la composition d'enduction. Le taux résiduel de fonctions acides libres en surface peut être calculé avec la méthode de dosage conductimétrique suivante :

> Les dosages conductimétriques ont pour principal objectif d'évaluer la quantité de fonctions acides libres disponibles sur le polymère acrylique et/ou méthacrylique. Deux types de charge sont à distinguer : les charges « acide fort » et les charges « acide faible ». Les charges « acide fort » sont notamment des charges sulfate $SO_4^{2-}$. Les charges

« acides faibles » sont les charges carboxyliques $COO^-$ amenées par l'acide acrylique et/ou méthacrylique. Le dosage conductimétrique s'effectue sur un latex préalablement lavé et dont le taux de solide est précisément connu. Le latex brut est dilué pour atteindre un taux de solide inférieur à 5%. Ce latex dilué est ensuite lavé sur des résines échangeuses d'ions mixtes, c'est-à-dire anionique et cationique. A l'issue de cette étape, les contre-ions des charges positives sont des ions hydroxyles et ceux des charges négatives des protons. Ce traitement permet d'éliminer les espèces ioniques non greffées à la surface des particules (charges provenant de l'amorceur ou molécules de tensioactif, libres ou faiblement adsorbées à la surface des particules). Le dosage consiste à déterminer les minimums de neutralisation des fonctions acides à l'aide d'une sonde conductimétrique et se déroule en deux étapes. La première étape consiste à doser les charges acide fort ($SO_4^{2-}$) par ajout d'une solution de soude. Une fois la neutralisation de ces charges terminée, on additionne un excès de soude, afin de transformer les fonctions acide carboxylique présentes en surface en ions carboxylates. Les charges carboxyliques ne sont en effet pas directement détectables par la soude, du fait de leur faible $pK_A$. La deuxième étape consiste alors à doser le latex en retour par l'acide chlorhydrique : on neutralise tout d'abord les ions hydroxyles $OH^-$ en excès, puis les charges acide faible $COO^-$. Le latex dilué est mis en contact avec la résine et agité pendant 30 à 40 minutes. Il est ensuite filtré sur laine de quartz pour ôter la résine et sa conductivité est mesurée. L'opération est répétée autant de fois que nécessaire, jusqu'à ce que la conductivité soit constante. Les lavages successifs s'accompagnent en effet d'une diminution de la conductivité et le lavage est considéré comme terminé lorsque la conductivité se stabilise. Le taux de solide du latex lavé est ensuite précisément déterminé, car les lavages successifs ont tendance à diluer le latex. La granulométrie du latex lavé est par ailleurs vérifiée, afin de s'assurer qu'elle n'ait pas évolué au cours des lavages. Une certaine quantité de latex est pesée avec précision et diluée dans 50 mL d'eau déminéralisée. L'ensemble est agité et dégazé pendant 10 minutes par un flux d'azote, afin d'éliminer toute trace de dioxyde de carbone dissous dans l'eau, qui pourrait fausser le dosage en provoquant la libération de fonctions carboxyliques. Un balayage d'azote est également maintenu au cours des dosages. Un pré-dosage permet d'évaluer la quantité de latex à utiliser, compte tenu de la concentration des solutions titrantes (i.e. ~$10^{-2}$ mol.$L^{-1}$), pour obtenir la plus grande précision. Trois dosages sont ensuite réalisés pour s'assurer de la fiabilité des résultats. Le suivi des dosages est effectué par un conductimètre équipé d'une électrode de platine et relié à une centrale d'acquisition. A partir des courbes de dosage, il est alors possible de calculer la concentration des charges dans le latex par les équations suivantes :

$$C_{charges\text{-}acide\text{-}fort} = \frac{[NaOH]\times V_{NaOH}}{m_{latex}\times TS}\times 10^3 \qquad C_{charges\text{-}acide\text{-}faible} = \frac{[HCl]\times V_{HCl}}{m_{latex}\times TS}\times 10^3$$

dans lesquelles :

- $C_{charges}$ désigne la concentration des charges dans le latex, exprimée en micro équivalent par gramme de polymère (μeq/gpolymère),
- [NaOH] et [HCl] représentent respectivement la concentration en soude et en acide chlorhydrique des solutions titrantes, exprimées en mol.$L^{-1}$,
- $V_{NaOH}$ et $V_{HCl}$ représentent respectivement le volume de solutions titrantes de soude et d'acide chlorhydrique utilisé pour le dosage, exprimées en litres,
- $m_{latex}$ représente la masse de latex, exprimée en gramme, et
- TS représente le taux de solide du latex dilué.

Connaissant le taux d'acide du latex avant sa réticulation, il est possible de déduire par calcul taux résiduel de fonctions acides libres en surface de la couche primaire d'accrochage en tenant compte du nombre de fonctions réactives disponibles sur le réticulant.

Le procédé d'enduction est tel que la couche primaire d'accrochage obtenue sur le support a une épaisseur E est de façon préférée inférieure ou égale à 200 nm (nanomètres), de façon plus préférée comprise entre 40 nm et 120 nm, de façon plus préférée comprise entre 50 nm et 100 nm, et de façon encore plus préférée comprise entre 60 nm et 90 nm. L'épaisseur optimale de la couche primaire d'accrochage est d'environ 80 nm ±20 nm, ce qui correspond à 0,08 g/$m^2$ de support.

L'épaisseur de l'enduit peut notamment varier avec :

- le contenu solide de la composition d'enduction, et/ou
- la méthode d'application et la taille des rouleaux utilisés pour l'application de la composition d'enduction sur le support.

La mesure de l'épaisseur de la couche primaire d'accrochage ou du support enduit de la couche primaire

d'accrochage peut être effectuée par la méthode TOF-SIMS (Time of Flight-Secondary Ion Mass Spectrometry) où 2 types de mesures ont été réalisés.

1. Un profil de répartition qualitatif en profondeur de la surface jusqu'au coeur du support dans différentes conditions. Cela permet une estimation de l'épaisseur de la couche primaire d'accrochage en temps d'érosion et de faire une analyse comparative entre différents films de même nature.

2. Une mesure de l'épaisseur du film par relevé profilométrique d'un cratère obtenu sur un support de référence (avec arrêt de l'érosion ionique après élimination du revêtement), et le calcul de la vitesse d'érosion à partir du temps d'érosion correspondant pour l'éliminer.

A partir de la mesure n°2, une corrélation entre le temps d'érosion/vitesse d'érosion et l'épaisseur peut être établie. Ainsi l'épaisseur peut être estimée sur l'ensemble des supports où un temps d'érosion a été mesuré (mesure n°1).

La surface analysée est de 100 $\mu$m X 100 $\mu$m au centre du cratère d'érosion de taille supérieure (600 $\mu$m X 600 $\mu$m environ), ceci pour minimiser les effets de bords et de redéposition. Chaque point des profils est obtenu à partir d'un spectre de masse, ce qui permet une analyse élémentaire tout au long de la profondeur sondée. Ainsi, chaque élément ou contaminant présent à la surface, à coeur des couches et aux interfaces est automatiquement détecté. Sont indifféremment détectés dans le support et dans la couche primaire d'accrochage les éléments majeurs suivants : le carbone (C) et l'oxygène (O). Dans la couche primaire d'accrochage des traces de soufre (S) sont détectées. Les espèces ioniques retenues pour les profils de répartitions en profondeur sont donc les éléments suivants : C, O, et S.

Le support enduit obtenu est destiné à recevoir un revêtement donné en fonction des applications souhaitées. Le support enduit pour revêtu est un matériau composite. L'invention a pour objet un procédé de préparation d'un matériau composite ainsi que le matériau composite ainsi obtenu. Par « matériau composite », on entend ici le support tel que décrit ci-dessus, avec ou sans traitement physique de type corona ou plasma, qui a été revêtu d'une couche primaire d'accrochage selon l'invention, puis sur lequel on a appliqué un revêtement tel que défini ci-dessus. Un matériau composite selon l'invention est représenté sur la figure 2 : il comprend un support 1, un revêtement 3 et une couche primaire d'accrochage 2 entre le support 1 et le revêtement 3.

Pour obtenir ce matériau composite, un revêtement apte à réagir avec la couche primaire d'accrochage peut être appliqué sur le support revêtu de la couche primaire d'accrochage selon l'invention. Sans vouloir toutefois être liés par cette théorie, les inventeurs pensent que la réaction entre le revêtement et la couche primaire d'accrochage s'effectue via les fonctions acides libres du polymère ou polarité restant en surface du support enduit. La présence de cette polarité (groupements COOH, voire OH) permet une interaction entre la couche primaire d'accrochage et le revêtement et induit une meilleure fixation de ce dernier au support.

Le revêtement peut être choisi parmi :

- au moins une couche d'au moins un métal et/ou au moins un oxyde métallique,
- au moins une couche d'encre, et
- au moins une couche d'adhésif.

De manière très préférée, le revêtement consiste en au moins une couche d'au moins un métal, en particulier d'aluminium.

Dans certains cas, il peut être envisagé de combiner ces différents types de revêtements.

Lorsque le revêtement consiste en une couche d'au moins un métal et/ou au moins un oxyde métallique, le métal utilisé pour le revêtement peut être choisi parmi l'aluminium, le cuivre, le nickel, l'argent, l'or, et leurs alliages et le(s) oxyde(s) métallique(s) peut (peuvent) être choisi(s) parmi les oxydes de l'aluminium, de silicium, de cuivre, de nickel, d'argent et leurs mélanges. Il peut être également envisagé de revêtir le support enduit avec du sulfure de zinc.

L'encre utilisée pour le revêtement est classique et connue de l'homme de l'art. Elle peut être choisie parmi différents type d'encres, aux particularités propres selon leur mode de séchage (absorption, polymérisation oxydative, évaporation du solvant, polymérisation sous rayonnement UV). Les procédés d'impression couramment utilisés pour les films plastiques sont l'héliogravure, la flexographie et l'offset.

L'adhésif utilisé pour le revêtement peut être choisi parmi les adhésifs classiques connus de l'homme de l'art. On utilise particulièrement les produits commerciaux dont les applications sont identiques à celles visées dans la présente invention.

Le revêtement peut se faire sur la couche primaire d'accrochage qui est présente sur une ou deux faces du support.

L'application du revêtement peut consister en une métallisation, de préférence une métallisation sous vide. Elle consiste à vaporiser sous vide, par exemple à une pression d'environ $4x10^{-4}$ mbar, une fine couche métallique sur le film. L'évaporation est réalisée typiquement dans des creusets en céramiques chauffés par effet Joule à environ

1400°C à 1500°C. Le métal est alors projeté sur la surface à revêtir qui est en contact avec un rouleau refroidi appelé rouleau de couchage. Le métal condense alors immédiatement, formant ainsi une couche mince de 20 nm à 100 nm. Au cours de la métallisation, l'épaisseur de la couche de métal est contrôlée par des mesures de Densité Optique (DO, mesure de la transparence du film).

La métallisation peut être faite soit avec au moins un métal choisi parmi l'aluminium, le cuivre, le nickel, l'argent, l'or, et leurs alliages, soit avec au moins un oxyde métallique choisi parmi les oxydes de l'aluminium, de silicium, de cuivre, de nickel et d'argent, soit avec un de leurs mélanges.

Lorsqu'il s'agit de l'application d'un revêtement encre et adhésif est effectuée selon les méthodes connues de l'homme de l'art, en particulier l'impression/complexage.

Il a été découvert que, de façon surprenante, le matériau composite selon l'invention présentait à la fois de bonne propriété d'adhérence entre le support et le revêtement, mais aussi de très bonnes propriétés barrières, en particulier à l'oxygène et à la vapeur d'eau. Ces bonnes propriétés sont avantageusement maintenues dans des conditions de haute température et d'humidité.

Il a été constaté que le matériau composite présentait des propriétés barrières accrues, en particulier des propriétés barrières à l'oxygène. Grâce à l'ajout de polyester porteur de groupes sulfonyloxy dans la couche primaire d'accrochage, la propriété barrière à l'oxygène de matériau composite a atteint de façon surprenante des niveaux significativement bas. Le matériau composite peut présenter avantageusement un taux de transmission d'oxygène à 23°C et 50% de taux d'humidité inférieur à 1 cc/$m^2$/j, de préférence inférieur à 0,5 mg/$m^2$/j. De plus, il peut avantageusement présenter un taux de transmission de vapeur d'eau à 38°C et 90% de taux d'humidité au moins inférieur à 2 mg/$m^2$/j, de préférence inférieur à 1 mg/$m^2$/j. De façon générale, le matériau composite peut avantageusement présenter un taux de transmission d'oxygène et à la vapeur d'eau inférieur ou égal à 1 cc/$m^2$/j.

Les mesures de perméabilité à l'oxygène sont réalisées selon la norme ASTM F-1927 « Standard Test Method for determination of Oxygen Gas Transmission Rate, Permeance at Controlled Relative Humidity through Barrier Materials using a Coulometric Detector », les résultats sont exprimés en cc/$m^2$/j (centimètre cube par mètre carré et par jour). Les mesures de perméabilité à la vapeur d'eau sont réalisées selon la norme ASTM F-1249 « Standard Test Method for Water Vapor Transmission Rate through Plastic Film and Sheeting using a Modulated Infrared Sensor », les résultats sont exprimés en mg/$m^2$/j (milligramme par mètre carré et par jour).

Les propriétés barrières sont particulièrement observées pour des films métallisés. Ceci n'est pas une propriété nécessaire dans le cas des films imprimables ou adhésifs.

Par ailleurs, le matériau composite obtenu peut présenter avantageusement des propriétés d'adhésion du revêtement aussi bonnes, voire meilleures que dans l'art antérieur, en conditions humides aussi bien qu'en conditions sèches.

En condition sèche, l'adhésion du revêtement peut être avantageusement d'au moins 1000 gF/38 mm. En conditions humides, l'adhésion du revêtement peut être avantageusement d'au moins 200 gF/38 mm. De façon générale, l'adhésion du revêtement en conditions humides et sèches peut être avantageusement d'au moins 500 gF/38 mm. Les propriétés d'adhésion sont mesurées selon le test d'adhésion TA.

Le test d'adhésion TA est mené selon les recommandations AIMCAL TP-105-92 (Metallizing Technical Reference éditée par Association of Industrial Metallizers, Coaters and Laminators). Il est décrit pour le métal mais il convient pour les autres types de revêtement. Le test TA permet de mesurer la force d'adhésion entre le métal et le PET à l'aide d'un dynamomètre. Ce test est réalisé dans des conditions sèches et humides. Le support métallisé, de préférence un film PET métallisé, est scellé avec un film polyéthylène traité (DAP). Une éprouvette de 38 mm de large est ensuite découpée dans l'échantillon et va servir à la mesure. L'éprouvette est testée en traction à l'aide d'un dynamomètre INSTRON en vue de déterminer la force à appliquer pour arracher la couche d'aluminium du film enduit. Le support est fixé au mors du bas et le film DAP à celui du haut. De cette façon, une traction est exercée à 180° à une vitesse de 100 mm/min sur la zone scellée et la force nécessaire au délaminage est mesurée (norme suivie NF T 54-122, « Evaluation de la qualité d'une soudure ou d'un collage de deux éléments de feuilles par un essai de traction »). Le résultat de ce test TA est une force d'adhésion exprimée en gF/38 mm. Pour chaque échantillon, un minimum de 3 éprouvettes est testé ainsi, et chaque film est découpé en six bandes larges dont on mesure la densité optique afin de connaître la quantité de métal déposée. On mesure la force qu'il faut au dynamomètre pour arracher la couche de métal au film de PET en conditions sèche et humide. Pour la mesure en milieu humide, l'opérateur applique une faible quantité d'eau pour simuler un environnement chargé en humidité.

Les applications des matériaux composites selon la présente invention sont notamment l'emballage alimentaire, l'emballage médical, les films imprimables, la décoration ou la protection de supports et les applications dites industrielles, par exemple l'isolation électrique, les composants électroniques, les films de protection, les films optiques, les films filtrant une partie du spectre lumineux, les films pour l'agriculture ou le bâtiment.

Concernant l'emballage, il peut s'agir de l'emballage de produits alimentaires depuis leur site fabrication ou de production jusqu'à leur arrivée chez le consommateur final. Ces films sont développés tout spécialement pour assurer une barrière soit aux gaz (oxygène, azote, hélium, vapeur d'eau, etc.) soit aux arômes. Il peut s'agir également d'un

film d'emballage pour la cuisson des aliments au four micro-ondes. Le remplissage des emballages alimentaires peut être effectué à chaud. Les propriétés barrières des matériaux utilisés mais aussi le maintien de ces propriétés même dans des conditions de haute température et en conditions humides sont donc importants.

Il peut s'agir aussi de l'emballage de protection de produits industriels divers tels que des appareils électroménagers, des pièces électroniques, ou bien dans le secteur du bâtiment pour l'isolation thermique et la protection contre l'humidité.

S'agissant de la décoration, ces films sont utilisés pour créer des surfaces de type faux bois par exemple.

Concernant les films ou feuilles pour l'art graphique, il peut s'agir des supports imprimables recouverts d'encres ou non.

## EXEMPLES

### Exemple 1 : Amélioration des performances barrière du Latex B par augmentation du taux de réticulant

Un polymère acrylique et/ou méthacrylique commercialisé sous le nom BT-67 par la société DSM a été utilisé. Il se présente sous la forme de particules dont le diamètre moyen est inférieur à 100 nm en dispersion dans de l'eau (0-15 ou 20% d'extrait sec). Ce polymère est noté par la suite « Latex B ».

Le réticulant utilisé est Cymel 303 LF, ci-après dénommé « Réticulant X ».

Quatre compositions d'enductions F1, F2, F3 et F4 ont été préparées :

- F1 : Latex B uniquement
- F2 : Latex B + Réticulant X - Rapport massique latex/réticulant de 80/20 (extrait sec/extrait sec).
- F3 : Latex B + Réticulant X - Rapport massique latex/réticulant de 75/25 (extrait sec/extrait sec).
- F4 : Latex B + Réticulant X - Rapport massique latex/réticulant de 70/30 (extrait sec/extrait sec).

Ces compositions ont été déposées sur un film PET par un procédé d'enduction en ligne héliographique selon la figure 1 (machine pilote Toray Film Europe). Le rouleau hélio en rotation entraîne la composition d'enduction sur le film PET. Les rouleaux hélio petite ou grande gravure peuvent être utilisés pour l'enduction en ligne. La composition d'enduction a été séchée à l'aide d'un rayonnement infra-rouge à une longueur d'onde de l'ordre de 2 $\mu$m.

Le film PET enduit d'une couche de primaire d'accrochage a été ensuite revêtu d'une couche d'aluminium obtenue par évaporation sous vide (à $4x10^{-4}$ mbar) lors d'un procède de métallisation industriel classique (machine TopMet de chez Applied Materials). Au cours de la métallisation, l'épaisseur de la couche de métal a été contrôlée par une mesure de transparence du film traduite en termes de Densité Optique (DO). La DO est comprise entre 2,4-3,0 ce qui correspond à une épaisseur de la couche métal de 30 à 60 nm.

Les propriétés d'adhésion du revêtement métallique aluminium en condition sèche et humide, et le taux de transmission d'oxygène ($PO_2$) du matériau obtenu ont été évalués comme cela a été décrit ci-dessus et les résultats sont donnés dans le tableau 1.

Tableau 1

| | $PO_2$ ($cm^3/m^2/J$) | Adhésion métal sec (gF/38 mm) | Adhésion métal humide (gF/38 mm) |
|---|---|---|---|
| F1 | 4,66 | 60 | 4 |
| F2 | 3,07 | 1500 | 200 |
| F3 | 1,84 | >1500 | 200 |
| F4 | 1,76 | >1500 | 360 |

On constate que l'augmentation de la concentration en réticulant tend à améliorer le niveau de barrière du matériau. Cependant, même à haute concentration, le taux de transmission d'oxygène reste nettement supérieur à 1 $cm^3/m^2/J$.

### Exemple 2 : Amélioration des performances barrière par ajout d'un polyester hydrosoluble à groupes sulfonyloxy

Aux compositions précédentes a été ajouté un polyester hydrosoluble porteur de groupes sulfonyloxy de formule suivante :

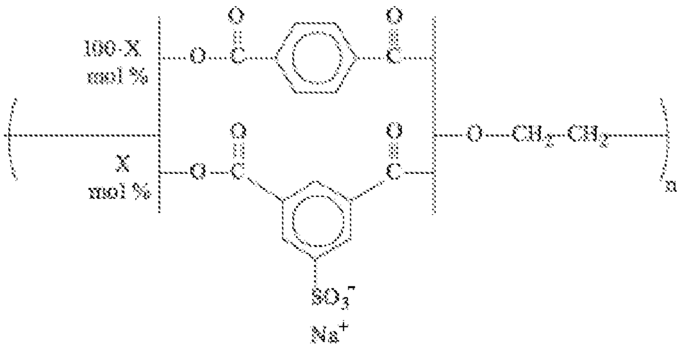

dans laquelle X vaut 20. Ce polymère est noté par la suite « PES ».

Six compositions d'enductions F5 à F10 ont été préparées :

- F5 : Latex B

  + Réticulant X - Rapport massique latex/réticulant de 80/20 (extrait sec/extrait sec)
  + 5% de PES en poids sec, par rapport au poids sec de Latex B

- F6 : Latex B

  + Réticulant X - Rapport massique latex/réticulant de 80/20 (extrait sec/extrait sec)
  + 10% de PES en poids sec, par rapport au poids sec de Latex B

- F7 : Latex B

  + Réticulant X - Rapport massique latex/réticulant de 75/25 (extrait sec/extrait sec)
  + 5% de PES en poids sec, par rapport au poids sec de Latex B

- F8 : Latex B

  + Réticulant X - Rapport massique latex/réticulant de 75/25 (extrait sec/extrait sec)
  + 10% de PES en poids sec, par rapport au poids sec de Latex B

- F9 : Latex B

  + Réticulant X - Rapport massique latex/réticulant de 70/30 (extrait sec/extrait sec)
  + 5% de PES en poids sec, par rapport au poids sec de Latex B

- F10 : Latex B

  + Réticulant X - Rapport massique latex/réticulant de 70/30 (extrait sec/extrait sec)
  + 10% de PES en poids sec, par rapport au poids sec de Latex B

Ces compositions ont été utilisées comme décrit dans l'exemple 1 et les propriétés des matériaux obtenus ont été mesurées de la même manière. Les résultats sont donnés dans le tableau 2.

Tableau 2

| | $PO_2$ ($cm^3/m^2/J$) | Adhésion métal sec (gF/38 mm) | Adhésion métal humide (gF/38 mm) |
|---|---|---|---|
| Latex B / Réticulant X (80/20) sans et avec PES | | | |
| F2 | 3,07 | 1500 | 200 |
| F5 | 0,70 | 1020 | 130 |
| F6 | 0,86 | >1500 | 1400 |

(suite)

| | | | |
|---|---|---|---|
| Latex B / Réticulant X (75/25) sans et avec PES | | | |
| F3 | 1,84 | >1500 | 200 |
| F7 | 2,07 | 720 | 100 |
| F8 | 1,92 | 1010 | 60 |
| Latex B / Réticulant X (70/30) sans et avec PES | | | |
| F4 | 1,76 | >1500 | 360 |
| F9 | 2,42 | 1400 | 150 |
| F10 | 2,58 | 700 | 70 |

De façon tout à fait surprenante, l'ajout du polyester à groupes sulfonyloxy à la formulation Latex B/Réticulant X (80/20) a permis d'obtenir un matériau dont la barrière à l'oxygène atteint des niveaux significativement bas, $PO_2$ étant inférieur à 1 $cm^3/m^2/J$. En outre, cet ajout n'a pas eu d'impact négatif sur les forces d'adhésion entre le support en PET et le revêtement métallique. Au contraire, l'adhésion en conditions humides a été particulièrement renforcée lors de l'ajout de 10% de PES.

## Revendications

1. Composition d'enduction comprenant :

   - au moins un polymère acrylique et/ou méthacrylique présentant un taux de gel d'au moins 50% en poids, par rapport au poids total de polymère acrylique et/ou méthacrylique, le taux de gel étant le taux d'insoluble du polymère déterminé à l'aide d'un extracteur Soxhlet tel que décrit dans la description ;
   - au moins un réticulant ;
   - au moins un polyester à groupes sulfonyloxy soluble ou dispersable dans l'eau.

2. Composition d'enduction selon la revendication 1, **caractérisée en ce que** le polymère acrylique et/ou méthacrylique se présente sous la forme de particules de polymère dispersées en phase aqueuse.

3. Composition d'enduction selon l'une ou l'autre des revendications 1 et 2, **caractérisée en ce que** le réticulant est une résine à base d'amine, de préférence une mélamine-aldéhyde, une benzoguanamine-aldéhyde ou des dérivés de celles-ci.

4. Composition d'enduction selon l'une quelconque des revendications 1 à 3, **caractérisée en ce que** les proportions massique (poids/poids) de polymère acrylique et/ou méthacrylique par rapport au réticulant sont comprises entre 95/5 et 70/30, de façon plus préférée entre 90/10 et 75/25, et de façon encore plus préférée entre 85/15 et 80/20.

5. Composition d'enduction selon l'une quelconque des revendications 1 à 4, **caractérisée en ce que** la teneur en polyester à groupes sulfonyloxy soluble ou dispersable dans l'eau est comprise entre 2% et 30% en poids, de façon plus préférée entre 5% et 20% en poids, et de façon encore plus préférée entre 8% et 12% en poids sec, par rapport au poids sec de polymère acrylique et/ou méthacrylique.

6. Procédé d'enduction d'un support avec au moins une couche de primaire d'accrochage, **caractérisé par** la mise en oeuvre des étapes suivantes :

   a) on met en oeuvre un support ;
   b) éventuellement, on effectue un traitement physique de surface dudit support ;
   c) on enduit au moins une face dudit support avec la composition d'enduction telle que définie dans l'une quelconque des revendications 1 à 5 ; et
   d) on fait réticuler l'enduit pour obtenir une couche primaire d'accrochage, le taux résiduel de fonctions acides libres en surface de la couche primaire d'accrochage étant d'au moins 5% en poids, par rapport au poids total de polymère contenu dans la couche primaire d'accrochage.

7. Procédé d'enduction selon la revendication 6, **caractérisé en ce que** le support est un film en polyester, de préférence un film en polyéthylène téréphtalate (PET), dont l'épaisseur est de façon préférée inférieure ou égale à 150 $\mu$m (micromètres), de façon plus préférée comprise entre 4 $\mu$m et 100 $\mu$m, de façon plus préférée comprise entre 4 $\mu$m et 40 $\mu$m, et de façon encore plus préférée comprise entre 4 $\mu$m et 12 $\mu$m.

8. Procédé d'enduction selon l'une ou l'autre des revendications 6 et 7, **caractérisé en ce que** la couche primaire d'accrochage obtenue sur le support a une épaisseur E inférieure ou égale à 200 nm (nanomètres), de façon plus préférée comprise entre 40 nm et 120 nm, de façon plus préférée comprise entre 50 nm et 100 nm, et de façon encore plus préférée comprise entre 60 nm et 90 nm.

9. Procédé d'enduction selon l'une quelconque des revendications 6 à 8, **caractérisé en ce que** l'enduction du support est effectuée en ligne.

10. Procédé de préparation d'un matériau composite comprenant l'étape consistant à appliquer sur un support enduit d'une couche primaire d'accrochage obtenu par le procédé selon l'une quelconque des revendications 6 à 9 un revêtement apte à réagir avec la couche primaire d'accrochage.

11. Procédé de préparation d'un matériau composite selon la revendication 10, **caractérisé en ce que** le revêtement est choisi parmi :

   - au moins une couche d'au moins un métal et/ou au moins un oxyde métallique,
   - au moins une couche d'encre, et
   - au moins une couche d'adhésif ;

   et de préférence, le revêtement consiste en au moins une couche d'au moins un métal, en particulier d'aluminium.

12. Matériau composite susceptible d'être obtenu par le procédé selon la revendication 10 ou la revendication 11.

13. Matériau composite selon la revendication 12, **caractérisé en ce que** le revêtement est au moins une couche d'au moins un métal et/ou au moins un oxyde métallique et **en ce qu'**il présente un taux de transmission d'oxygène et à la vapeur d'eau inférieur ou égal à 1 cc/$m^2$/j.

14. Matériau composite selon l'une ou l'autre des revendications 12 ou 13, **caractérisé en ce que** le revêtement est au moins une couche d'au moins un métal et/ou au moins un oxyde métallique et **en ce que** l'adhésion du revêtement en conditions humides et sèches est d'au moins 500 gF/38 mm.

15. Matériau composite selon l'une quelconque des revendications 12 à 14, **caractérisé en ce que** le support comprend en partie du produit recyclé issu du support lui-même et/ou du support enduit et/ou du support enduit et revêtu.

16. Article choisi dans le groupe constitué par des emballages alimentaires et non-alimentaires, les films ou feuilles pour l'art graphique, les films ou feuilles pour la décoration, les films ou feuilles pour la protection de support et les films ou feuilles pour l'isolation thermique et la protection contre l'humidité dans le secteur du bâtiment, **caractérisé en ce qu'**il comprend un matériau composite tel que défini dans l'une quelconque des revendications 12 à 15 ou tel qu'obtenu à l'issu du procédé tel que défini dans l'une des revendications 10 ou 11.

**Patentansprüche**

1. Beschichtungszusammensetzung, umfassend:

   - mindestens ein Acrylpolymer und/oder Methacrylpolymer mit einem Gelgehalt von mindestens 50 Gew.-% im Verhältnis zum Gesamtgewicht des Acryl- und/oder Methacrylpolymers, wobei der Gelgehalt der unlösliche Polymergehalt ist, der mit Hilfe eines Soxhlet-Extraktors, wie in der Beschreibung beschrieben, bestimmt wird;
   - mindestens ein Vernetzungsmittel;
   - mindestens einen Polyester mit Sulfonyloxygruppen, der in Wasser löslich oder dispergierbar ist.

2. Beschichtungszusammensetzung nach Anspruch 1,
**dadurch gekennzeichnet, dass** das Acrylpolymer und/oder Methacrylpolymer in der Form von Polymerpartikeln

vorliegt, die in der wässrigen Phase dispergiert sind.

**3.** Beschichtungszusammensetzung nach einem der Ansprüche 1 und 2,
**dadurch gekennzeichnet, dass** das Vernetzungsmittel ein Harz auf der Basis von Amin, vorzugsweise einem Melaminaldehyd, einem Benzoguanaminaldehyd oder Derivaten derselben ist.

**4.** Beschichtungszusammensetzung nach einem der Ansprüche 1 bis 3,
**dadurch gekennzeichnet, dass** die Massenanteile (Gewicht/Gewicht) des Acryl- und/oder Methacrylpolymers im Verhältnis zum Vernetzungsmittel zwischen 95/5 und 70/30, bevorzugter zwischen 90/10 und 75/25 und noch stärker bevorzugt zwischen 85/15 und 80/20 liegen.

**5.** Beschichtungszusammensetzung nach einem der Ansprüche 1 bis 4,
**dadurch gekennzeichnet, dass** der Gehalt an Polyester mit Sulfonyloxygruppen, der in Wasser löslich oder dispergierbar ist, zwischen 2 Gew.-% und 30 Gew.-%, bevorzugter zwischen 5 Gew.-% und 20 Gew.-% und noch stärker bevorzugt zwischen 8 % und 12 %, bezogen auf das Trockengewicht, im Verhältnis zum Trockengewicht des Acryl- und/oder Methacrylpolymers liegt.

**6.** Verfahren zur Beschichtung eines Trägers mit mindestens einer Haftprimerschicht, **dadurch gekennzeichnet, dass** die folgenden Schritte durchgeführt werden:

a) ein Träger wird hergestellt;
b) gegebenenfalls wird eine physikalische Behandlung der Oberfläche des Trägers vorgenommen;
c) mindestens eine Fläche des Trägers wird mit der Beschichtungszusammensetzung, wie in einem der Ansprüche 1 bis 5 definiert, beschichtet; und
d) die Beschichtung wird vernetzt, um eine Haftprimerschicht zu erhalten, wobei der Restgehalt an freien Säurefunktionen an der Oberfläche der Haftprimerschicht mindestens 5 Gew.-% im Verhältnis zum Gesamtgewicht des in der Haftprimerschicht enthaltenen Polymers beträgt.

**7.** Beschichtungsverfahren nach Anspruch 6,
**dadurch gekennzeichnet, dass** der Träger ein Polyesterfilm, vorzugsweise ein Polyethylenterephthalat(PET)-Film ist, dessen Dicke vorzugsweise kleiner oder gleich 150 $\mu$m (Mikrometer) ist, bevorzugter zwischen 4 $\mu$m und 100 $\mu$m, bevorzugter zwischen 4 $\mu$m und 40 $\mu$m und noch stärker bevorzugt zwischen 4 $\mu$m und 12 $\mu$m liegt.

**8.** Beschichtungsverfahren nach einem der Ansprüche 6 und 7,
**dadurch gekennzeichnet, dass** die Haftprimerschicht, die auf dem Träger erhalten wird, eine Dicke E von kleiner oder gleich 200 nm (Nanometer), bevorzugter zwischen 40 nm und 120 nm, bevorzugter zwischen 50 nm und 100 nm und noch stärker bevorzugt zwischen 60 nm und 90 nm aufweist.

**9.** Beschichtungsverfahren nach einem der Ansprüche 6 bis 8,
**dadurch gekennzeichnet, dass** die Beschichtung des Trägers inline durchgeführt wird.

**10.** Verfahren zur Herstellung eines Verbundstoffs, umfassend den Schritt, der aus dem Aufbringen eines Überzugs, der mit der Haftprimerschicht reagieren kann, auf einen Beschichtungsträger einer Haftprimerschicht, der durch das Verfahren nach einem der Ansprüche 6 bis 9 erhalten wird, besteht.

**11.** Verfahren zur Herstellung eines Verbundstoffs nach Anspruch 10,
**dadurch gekennzeichnet, dass** der Überzug ausgewählt wird aus:

- mindestens einer Schicht mindestens eines Metalls und/oder mindestens eines Metalloxids,
- mindestens einer Schicht einer Tinte, und
- mindestens einer Schicht eines Haftmittels;

und vorzugsweise der Überzug aus mindestens einer Schicht mindestens eines Metalls, insbesondere Aluminium, besteht.

**12.** Verbundstoff, welcher durch das Verfahren nach Anspruch 10 oder Anspruch 11 erhalten werden kann.

**13.** Verbundstoff nach Anspruch 12,

**dadurch gekennzeichnet, dass** der Überzug mindestens eine Schicht mindestens eines Metalls und/oder mindestens eines Metalloxids ist, und dadurch, dass dieser eine Sauerstoff- und Wasserdampftransferrate kleiner oder gleich 1 cc/$m^2$/j aufweist.

**14.** Verbundstoff nach einem der Ansprüche 12 oder 13,
**dadurch gekennzeichnet, dass** der Überzug mindestens eine Schicht mindestens eines Metalls und/oder mindestens eines Metalloxids ist, und dadurch, dass die Adhäsion des Überzugs unter feuchten und trockenen Bedingungen mindestens 500 gF/38 mm beträgt.

**15.** Verbundstoff nach einem der Ansprüche 12 bis 14,
**dadurch gekennzeichnet, dass** der Träger teilweise ein recycliertes Produkt umfasst, das vom Träger selbst und/oder vom Beschichtungsträger und/oder vom überzogenen Beschichtungsträger stammt.

**16.** Artikel, welcher aus der Gruppe ausgewählt wird, die aus Lebensmittel- und Nicht-Lebensmittelverpackungen, Filmen oder Folien für die graphische Kunst, Filmen oder Folien zur Dekoration, Filmen oder Folien zum Schutz von Trägern und Filmen oder Folien zur thermischen Isolierung und zum Schutz gegen Feuchtigkeit auf dem Bausektor besteht,
**dadurch gekennzeichnet, dass** dieser einen Verbundstoff, wie in einem der Ansprüche 12 bis 15 definiert, oder wie durch das Verfahren, wie in einem der Ansprüche 10 oder 11 definiert, erhalten, umfasst.

## Claims

**1.** Coating composition comprising:

- at least one acrylic and/or methacrylic polymer having a gel content of at least 50% by weight, relative to the total weight of acrylic and/or methacrylic polymer, the gel content being the proportion of insoluble matter in the polymer determined using a Soxhlet extractor as described in the description;
- at least one cross-linking agent;
- at least one water-soluble or water-dispersible polyester with sulphonyloxy groups.

**2.** Coating composition according to claim 1, **characterized in that** the acrylic and/or methacrylic polymer is in the form of polymer particles dispersed in an aqueous phase.

**3.** Coating composition according to either of claims 1 and 2, **characterized in that** the cross-linking agent is an amine-based resin, preferably a melamine-aldehyde, a benzoguanaminealdehyde or derivatives thereof.

**4.** Coating composition according to any one of claims 1 to 3, **characterized in that** the proportions by weight (weight/weight) of acrylic and/or methacrylic polymer relative to the cross-linking agent are comprised between 95/5 and 70/30, more preferably comprised between 90/10 and 75/25, and even more preferably comprised between 85/15 and 80/20.

**5.** Coating composition according to any one of claims 1 to 4, **characterized in that** the content of water-soluble or water-dispersible polyester with sulphonyloxy groups is comprised between 2 and 30% by weight, more preferably comprised between 5 and 20% by weight, and even more preferably comprised between 8 and 12% by weight dry, relative to the dry weight of acrylic and/or methacrylic polymer.

**6.** Process for coating a substrate with at least one layer of bonding primer, **characterized in that** the following steps are implemented:

a) a substrate is implemented;
b) optionally, a physical surface treatment of said substrate is carried out;
c) at least one face of said substrate is coated with the coating composition as defined in any one of claims 1 to 5; and
d) the coating is cross-linked to obtain a priming coat, the residual level of free acid functions at the surface of the priming coat being at least 5% by weight, relative to the total weight of polymer contained in the priming coat.

**7.** Coating process according to claim 6, **characterized in that** the substrate is a polyester film, preferably a film of

polyethylene terephthalate (PET), the thickness of which is preferably less than or equal to 150 μm (micrometres), more preferably comprised between 4 μm and 100 μm, more preferably comprised between 4 μm and 40 μm, and even more preferably comprised between 4 μm and 12 μm.

**8.** Coating process according to either of claims 6 and 7, **characterized in that** the priming coat obtained on the substrate has a thickness E less than or equal to 200 nm (nanometres), more preferably comprised between 40 nm and 120 nm, more preferably comprised between 50 nm and 100 nm, and even more preferably comprised between 60 nm and 90 nm.

**9.** Coating process according to any one of claims 6 to 8, **characterized in that** coating of the substrate is carried out in line.

**10.** Preparation process of a composite material comprising the step consisting of applying a coating capable of reacting with the priming coat, on a substrate coated with a priming coat obtained by the process according to any one of claims 6 to 9.

**11.** Preparation process of a composite material according to claim 10, **characterized in that** the coating is selected from:

- at least one layer of at least one metal and/or at least one metal oxide,
- at least one layer of ink, and
- at least one layer of adhesive;

and preferably, the coating consists of at least one layer of at least one metal, in particular of aluminium.

**12.** Composite material obtainable by the process according to claim 10 or claim 11.

**13.** Composite material according to claim 12, **characterized in that** the coating is at least one layer of at least one metal and/or at least one metal oxide and **in that** it has an oxygen and water vapour transmission rate of less than or equal to 1 cc/$m^2$/d.

**14.** Composite material according to either of claims 12 or 13, **characterized in that** the coating is at least one layer of at least one metal and/or at least one metal oxide and **in that** the adhesion of the coating under wet and dry conditions is at least 500 gF/38 mm.

**15.** Composite material according to any one of claims 12 to 14, **characterized in that** the substrate partly comprises recycled product originating from the substrate itself and/or from the coated substrate and/or from the coated and primed substrate.

**16.** Article selected from the group constituted by food and non-food packaging, films or sheets for graphic art, films or sheets for decoration, films or sheets for substrate protection and films or sheets for thermal insulation and protection against moisture in the building sector, **characterized in that** it comprises a composite material as defined in any one of claims 12 to 15 or as obtained as a result of the process as defined in one of claims 10 or 11.

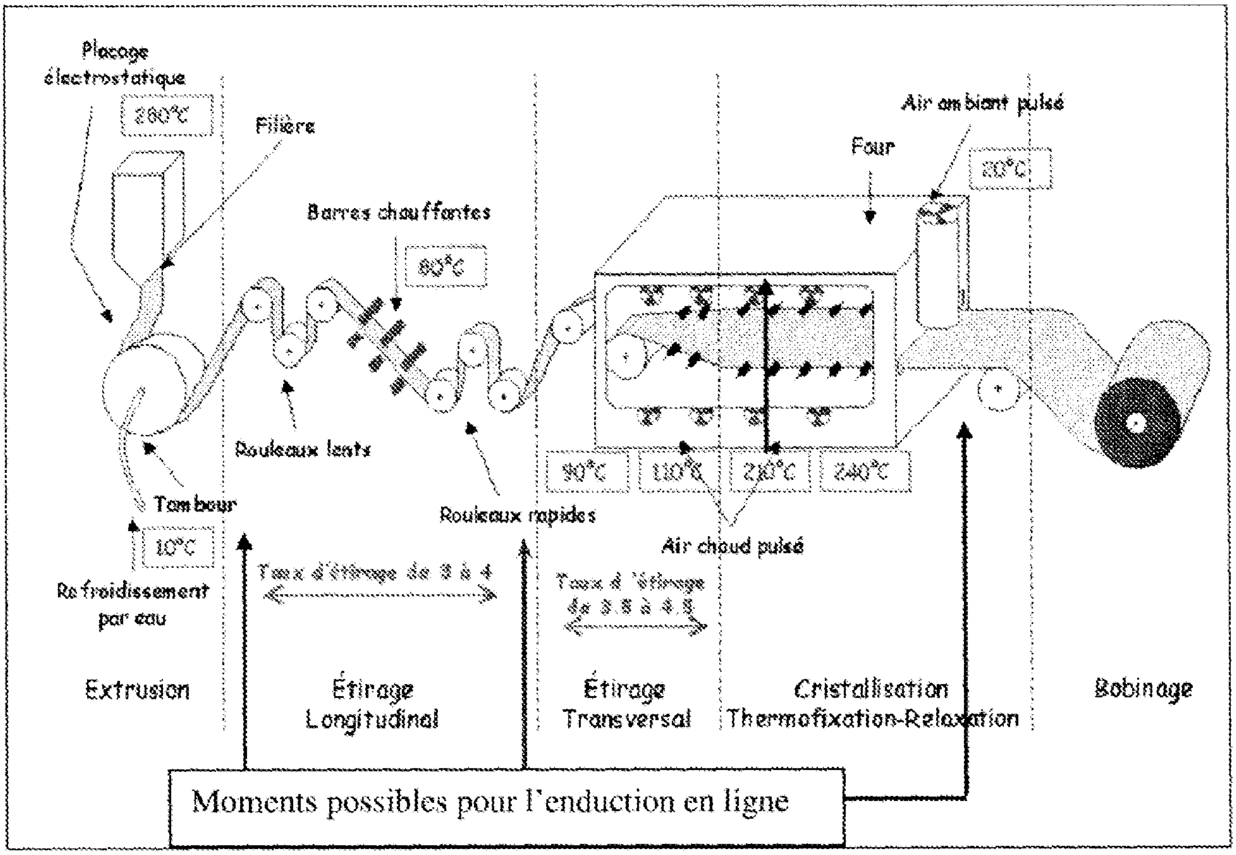


**Figure 1**

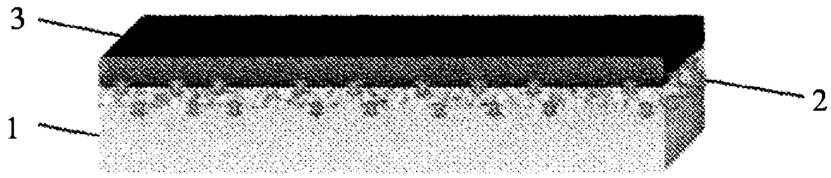


**Figure 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2794742 A
- US 2627088 A
- FR 1428831
- EP 0260203 A